(19) **Europäisches Patentamt / European Patent Office / Office européen des brevets**

(11) **EP 1 078 288 B1**

(12) **FASCICULE DE BREVET EUROPEEN**

(45) Date de publication et mention
de la délivrance du brevet:
**11.07.2007 Bulletin 2007/28**

(21) Numéro de dépôt: **99918048.2**

(22) Date de dépôt: **11.05.1999**

(51) Int Cl.:
*G02B 6/02* (2006.01)      *G02B 6/12* (2006.01)
*G03F 7/00* (2006.01)

(86) Numéro de dépôt international:
**PCT/FR1999/001119**

(87) Numéro de publication internationale:
**WO 1999/059009 (18.11.1999 Gazette 1999/46)**

(54) **PROCEDE D'INSCRIPTION DE RESEAUX DE BRAGG**

VERFAHREN ZUR HERSTELLUNG VON BRAGG-GITTERN

METHOD FOR FORMING BRAGG GRATINGS

(84) Etats contractants désignés:
**DE GB IT**

(30) Priorité: **12.05.1998  FR 9805959**

(43) Date de publication de la demande:
**28.02.2001  Bulletin 2001/09**

(73) Titulaire: **COMMISSARIAT A L'ENERGIE ATOMIQUE**
**75015 Paris (FR)**

(72) Inventeurs:
• **FERDINAND, Pierre**
  **F-78800 Houilles (FR)**

• **MAGNE, Sylvain**
  **F-92320 Châtillon (FR)**
• **MARTINEZ, Christophe**
  **F-91400 Orsay (FR)**

(74) Mandataire: **Ilgart, Jean-Christophe et al**
**c/o Brevatome,**
**3, rue du Docteur Lancereaux**
**75008 Paris (FR)**

(56) Documents cités:
| | |
|---|---|
| EP-A- 0 188 919 | EP-A- 0 226 728 |
| EP-A- 0 552 028 | EP-A- 0 604 039 |
| WO-A-97/22023 | WO-A-97/44692 |
| US-A- 4 792 197 | US-A- 5 629 998 |

Printed by Jouve, 75001 PARIS (FR)

**Description**

DOMAINE TECHNIQUE

La présente invention concerne un procédé d'inscription de réseaux de Bragg (« Bragg gratings ») ainsi qu'un appareil pour la mise en oeuvre de ce procédé.

Elle s'applique à l'obtention d'un grand nombre de dispositifs à réseaux de Bragg et, en particulier, à la fabrication de réseaux de Bragg à saut de phase et haute sélectivité spectrale, à la sur-inscription d'un réseau de Bragg pour en effacer un autre, à la fabrication de cavités de Fabry-Pérot et à la fabrication de réseaux de Bragg à enveloppe de modulation d'indice prédéfinie, tant pour les fibres optiques que pour les guides optiques intégrés.

ÉTAT DE LA TECHNIQUE ANTÉRIEURE

Les réseaux de Bragg ont fait leur apparition dans le domaine des fibres optiques il y a une vingtaine d'années. Auparavant, ces composants étaient couramment utilisés dans le domaine de l'optique intégrée, en acousto-optique et dans les semi-conducteurs, par exemple dans les lasers à réflecteur de Bragg réparti (« Distributed Bragg Reflector lasers »).

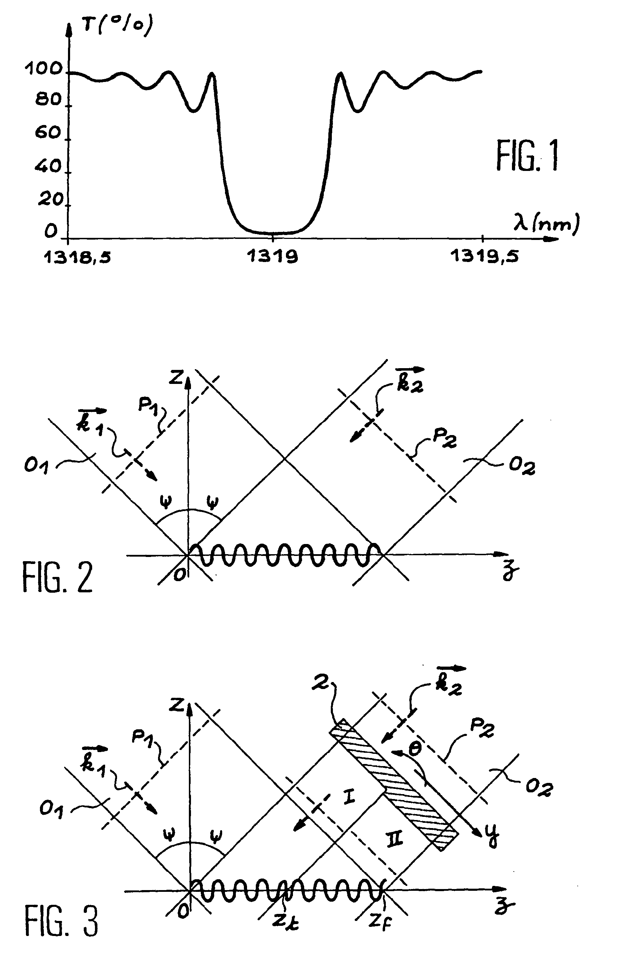

Un réseau de Bragg classique se comporte comme un filtre spectral vis-à-vis de l'onde qui le traverse. Il réfléchit une bande de longueurs d'onde de largeur donnée (typiquement quelques centaines de picomètres) autour d'une valeur centrale de résonance $\lambda$B dite longueur d'onde de Bragg. En transmission, par complémentarité, le spectre de l'onde guidée perd cette même bande de longueurs d'onde (voir la figure 1 sur laquelle les variations de la transmission T d'un réseau de Bragg classique sont représentées en fonction de la longueur d'onde $\lambda$, avec $\lambda$B=1319 nm).

Un réseau de Bragg a de nombreuses applications, principalement dans le domaine des télécommunications (par exemple pour le multiplexage, le démultiplexage, les dispositifs d'insertion-extraction (« add-drop devices »), les lasers à contre-réaction répartie (« Distributed Feed Back lasers »). Réalisé dans une fibre optique, ce réseau de Bragg a aussi révolutionné le domaine des capteurs à fibres optiques grâce à son rôle de transducteur (par exemple pour les températures et les allongements).

On connaît les réseaux de Bragg classiques, formés par une modulation sinusoïdale simple dont la réponse spectrale est donnée sur la figure 1, et des réseaux de Bragg évolués dans lesquels la modulation sinusoïdale est modifiée pour permettre la création de filtres de formes spectrales particulières : on a ainsi la possibilité d'améliorer les réseaux de Bragg classiques suivant le domaine d'application considéré ou les besoins, voire même de réaliser de nouveaux composants.

En pratique, la réalisation d'un réseau de Bragg évolué nécessite un procédé et un appareil ayant un certain nombre de qualités. Les problèmes à résoudre sont les suivants :

- l'appareil doit permettre de réaliser un réseau de Bragg conforme au résultat théorique attendu,
- le procédé de fabrication que l'on met en oeuvre avec l'appareil doit permettre d'avoir accès à un certain nombre de paramètres qui entrent en jeu lors de la réalisation des réseaux de Bragg,
- des inscriptions successives de deux réseaux de Bragg par le même protocole doivent donner le même résultat,
- le procédé et l'appareil doivent être simples et permettre à toute personne travaillant dans ce domaine d'obtenir le réseau de Bragg recherché, et
- pour pouvoir être commercialisé, l'appareil doit être peu coûteux et permettre la réalisation de diverses familles de réseaux de Bragg à un prix peu élevé.

EXPOSÉ DE L'INVENTION

La présente invention a pour but de résoudre les problèmes précédents.

L'invention a pour objet un procédé d'inscription comme défini dans la revendication 1.

Selon un premier mode de mise en oeuvre particulier du procédé objet de l'invention, la figure des interférences est transférée selon une configuration à séparation d'amplitude.

Selon un deuxième mode de mise en oeuvre particulier, la figure des interférences est transférée selon une configuration à séparation du front d'onde.

Dans l'invention, on modifie au cours du temps la position du décalage de phase ou la valeur de ce décalage de phase ou la position et la valeur de ce décalage de phase dans le faisceau lumineux formé par les deux sous-faisceaux.

L'invention nécessite un appareil pour la mise en oeuvre du procédé objet de l'invention, cet appareil comprenant :

- au moins une lame de phase apte à créer, entre au moins deux sous-faisceaux, un décalage de phase grâce à une différence de chemin optique, et

- un moyen de réglage de la position de la lame de phase, ce moyen de réglage ayant au moins deux degrés de liberté, l'un étant un degré de liberté angulaire prévu pour régler la valeur du décalage de phase et l'autre étant un degré de liberté de translation prévu pour régler la position du décalage de phase dans le faisceau lumineux formé par les deux sous-faisceaux.

L'appareil est simple quant à sa constitution, son réglage et son utilisation, et a une grande souplesse d'emploi.
Cet appareil comprend en outre des moyens interférométriques à deux ou trois miroirs pour le transfert de la figure des interférences selon une configuration à séparation d'amplitude ou bien des moyens interférométriques à prisme ou à miroir replié de Lloyd pour le transfert de la figure des interférences selon une configuration à séparation du front d'onde.
Grâce au procédé de l'invention, on peut obtenir un réseau de Bragg à enveloppe de modulation d'indice déterminée notamment un réseau de Bragg apodisé, obtenu par inscriptions successives de deux réseaux de Bragg comprenant des parties en opposition de phase, la sur-inscription d'un réseau de Bragg sur l'autre se faisant durant des temps variables, pour un positionnement variable du décalage de phase et pour une valeur variable de ce dernier, la position du décalage de phase étant déplacée avec un mouvement programmable.

BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- la figure 1, déjà décrite, montre les variations de la transmission d'un réseau de Bragg classique en fonction de la longueur d'onde,
- la figure 2 illustre schématiquement le schéma d'interférences de deux ondes planes sans lame de phase,
- la figure 3 illustre schématiquement le schéma d'interférences de deux ondes planes en présence d'une lame de phase,
- la figure 4 illustre schématiquement des lames de phase placées en série,
- la figure 5 illustre schématiquement une lame de phase courbe,
- la figure 6 illustre schématiquement une lame de phase formée par une lentille,
- la figure 7 illustre schématiquement une lame de phase à changement d'indice,
- la figure 8 illustre schématiquement une lame de phase inclinée par rapport à un faisceau lumineux incident,
- la figure 9 illustre schématiquement un dispositif de support de lame de phase utilisable dans l'invention,
- la figure 10 illustre schématiquement un procédé d'inscription à séparation d'amplitude d'un réseau de Bragg à saut de phase conformément à l'invention, dans le cas d'un montage par irradiation transverse,
- la figure 11 illustre schématiquement un procédé d'inscription à séparation du front d'onde d'un réseau de Bragg à saut de phase conformément à l'invention, utilisant la méthode du prisme,
- la figure 12 illustre schématiquement un procédé d'inscription également à séparation du front d'onde d'un réseau de Bragg à saut de phase conformément à l'invention, utilisant un miroir de Lloyd,
- la figure 13 montre les variations de la transmission d'un réseau de Bragg avec un saut de phase en fonction de la longueur d'onde,
- la figure 14 illustre schématiquement une double réflexion partielle dans un réseau de Bragg autour d'un changement de phase dû à une cavité,
- la figure 15 illustre schématiquement le couplage de modes propagatif et contra-propagatif dans un réseau de Bragg à saut de phase,
- la figure 16 illustre schématiquement un exemple d'une modulation d'indice à enveloppe linéaire, et
- la figure 17 illustre schématiquement un exemple d'une modulation d'indice apodisée par une courbe gaussienne.

EXPOSÉ DÉTAILLÉ DE MODES DE RÉALISATION PARTICULIERS

Conformément à la présente invention, on engendre des interférences avec un ou une pluralité de déphasages grâce à un ou une pluralité d'éléments optiques déphasants ou lames de phase.
On considère d'abord (figure 2) le cas simple de deux ondes lumineuses planes $O_1$ et $O_2$, issues d'un même faisceau lumineux et sans lame de phase. Les champs électriques de ces deux ondes sont notés $\vec{E}_1$ et $\vec{E}_2$, les plans d'onde correspondants $P_1$ et $P_2$ et les vecteurs d'onde correspondants $\vec{k}_1$ et $\vec{k}_2$. le module de $\vec{k}_1$ et $\vec{k}_2$ est noté k, celui de $\vec{E}_1$ et $\vec{E}_2$ est noté $\xi_0$. L'intensité I(z) résultant de l'interférence de ces deux ondes sur l'axe Oz de la figure 2 est de la forme :

$$I(z)=2.\xi_0{}^2.[1+\cos(2k \sin(\Psi).z)]$$

La période de la modulation ainsi créée dépend de l'angle $\psi$ que font les vecteurs d'onde $\vec{k}_1$ et $\vec{k}_2$ par rapport à l'axe OZ d'observation des franges d'interférence.

La succession de franges sombres et brillantes peut être transférée dans un guide d'onde par un phénomène photosensible dont l'efficacité dépend de nombreux paramètres tels que le type du matériau du guide, la puissance des faisceaux d'inscription, le temps d'exposition par exemple. On est ainsi capable d'inscrire un réseau de Bragg dans le guide.

On considère maintenant les interférences de ces deux ondes lorsqu'une lame de phase 2 est disposée sur le trajet de l'onde $O_2$ parallèlement au plan d'onde $P_2$ conformément à l'invention. On reprend les mêmes notations que précédemment en tenant compte de l'effet de la lame sur $\vec{E}_2$ (figure 3).

On voit deux zones I et II correspondant à deux sous-faisceaux parallèles formés par l'onde $O_2$ après qu'elle ait traversé la lame 2 dont l'épaisseur en regard de la zone II est supérieure à l'épaisseur en regard de la zone I. L'intensité I(z) devient alors :

$$I(z)=2\xi_0{}^2(1+\cos\ (2k\ \sin(\Psi)z))\qquad\text{pour}\ 0<z<z_t$$

$$I(z)=2\xi_0{}^2(1+\cos\ (2k\ \sin(\Psi)z+\Delta\Phi))\quad\text{pour}\ z_t<z<z_f$$

Le changement ou décalage de phase $\Delta\Phi$ introduit par la lame de phase dans l'un des deux faisceaux associés aux ondes se retrouve dans la modulation d'intensité qui va générer le réseau de Bragg.

Sur Oz l'abscisse de changement de phase est déterminée par la position relative de la lame 2 par rapport au faisceau $O_2$. Cette abscisse $z_t$ peut donc être modifiée très facilement par translation de la lame suivant un axe y parallèle à cette lame. On voit que la zone des interférences est délimitée par les abscisses O et $z_f$ sur l'axe Oz.

La valeur $\Delta\Phi$ est déterminée par la différence de chemin optique dans la lame entre les zones I et II. Cette lame peut être réalisée de manière à avoir $\Delta\Phi=\pi$. De plus cette valeur peut être très simplement modifiée par rotation de la lame selon un angle $\theta$ pour incliner cette lame par rapport au faisceau $O_2$.

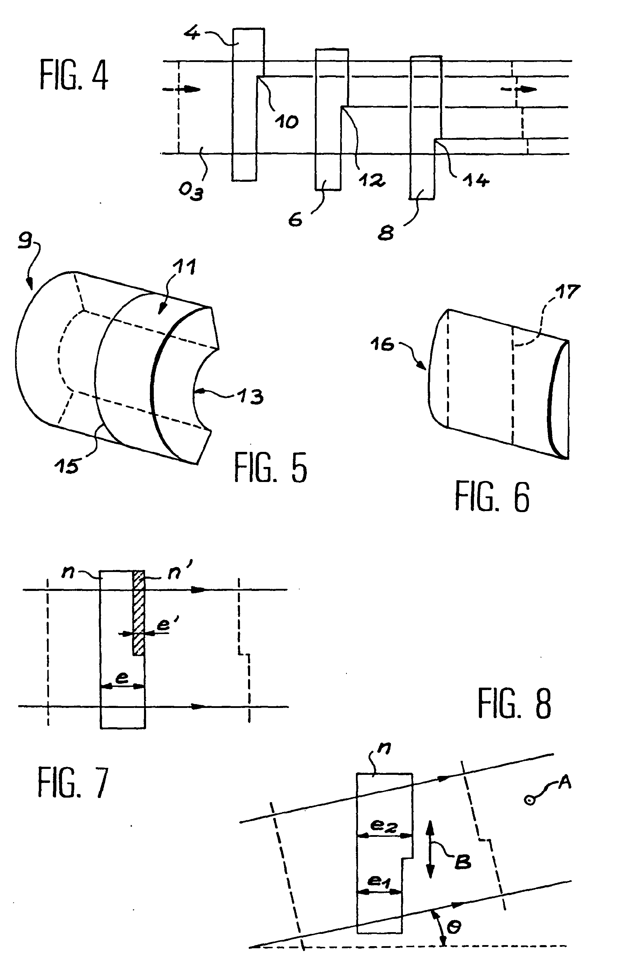

On peut aussi faire interférer deux ondes avec changements de phase multiples : de même que sur la figure 3 une lame de phase comportant une marche induit un déphasage dans la figure d'interférence, de même il est possible de placer dans l'un $O_3$ des deux faisceaux (par exemple ultraviolets) qui interfèrent une série de lames 4, 6, 8 disposées les unes à la suite des autres (figure 4). On obtient alors une figure d'interférence avec une série de changements de phase correspondant à des marches respectives 10, 12, 14 des lames 4, 6, 8.

Une autre solution est de réunir cette série de lames en une seule lame qui induit une série de déphasages par de multiples changements de chemin optique (lame en escalier).

On explique maintenant la réalisation d'une lame de phase. Le matériau qui constitue cette lame doit être transparent à la (ou aux) longueur(s) d'onde qui va (ou vont) servir à l'inscription du réseau de Bragg par photosensibilité dans un guide de lumière.

Dans ce qui suit, on présente la réalisation d'une lame à changement de phase unique mais on pourrait réaliser d'une manière semblable des lames induisant une pluralité de changements de phase.

La lame, ou élément optique déphasant, la plus facile à réaliser et la plus pratique à utiliser est une lame parallélépipédique. Lorsqu'elle est introduite dans un faisceau, le front d'onde d'entrée est conservé à la sortie avec seulement un ou plusieurs déphasages supplémentaires résultant d'au moins deux chemins optiques différents (figure 3).

Pour certaines applications de l'invention, on peut avoir besoin d'une lame non parallélépipédique en vue d'adapter la configuration de cette lame au front d'onde du faisceau à déphaser. On peut par exemple avoir besoin d'un changement de phase sans changement des caractéristiques de propagation d'un faisceau non parallèle dans lequel est introduit la lame : à titre d'exemple (figure 5) on peut réaliser une lame 9 délimitée par deux faces 11 et 13 cylindriques coaxiales ; grâce à la transition de chemin optique symbolisée par la ligne 15, une telle lame, placée dans un faisceau qui converge sur l'axe commun aux faces, induit sur le faisceau un déphasage comme dans l'exemple de la figure 3.

On peut aussi avoir besoin d'un changement de phase avec changement des caractéristiques de propagation du faisceau. Pour ce faire on peut par exemple utiliser une lentille que l'on peut considérer comme une lame non parallélépipédique. L'introduction du changement de phase se fait alors par le même principe que précédemment. Dans l'exemple de la figure 6 on voit une lentille cylindrique 16 qui focalise un faisceau tout en lui appliquant un saut de phase grâce à la transition de chemin optique symbolisée par la ligne 17.

Le saut de phase dans la lame peut être obtenu par changement d'épaisseur de celle-ci. On peut procéder par gravure d'une ou plusieurs parties de la lame ou par dépôt d'une ou plusieurs couches sur une ou plusieurs parties de la lame. En considérant par exemple une lame à deux zones d'épaisseurs respectives $e_1$ et $e_2$, le front d'onde est déformé après avoir traversé la lame, du fait du déphasage $\Delta\Phi = (2\pi / \lambda) (n - 1) (e_2 - e_1)$ où n est l'indice du matériau de la lame et $\lambda$ la longueur d'onde du faisceau qui traverse celle-ci.

On peut aussi utiliser une lame d'épaisseur $e_2$ que l'on introduit sur une certaine épaisseur du faisceau perpendiculairement aux plans d'onde de celui-ci (d'où $e_1=0$).

L'indice de propagation de l'onde dans une ou plusieurs parties de la lame peut aussi être modifié pour induire un ou plusieurs changements de chemin optique et donc un ou plusieurs sauts de phase. Considérons par exemple une lame d'épaisseur e et d'indice n. Si l'indice devient n' sur une épaisseur e' comme le montre la figure 7 on obtient e' (n'-n) = $(2k + 1)\lambda / 2$ (k : nombre entier). Cependant, lors d'une inclinaison de la lame (ce qui permet de régler le déphasage), les deux faisceaux ne « voient » pas le même indice et sont donc déviés différemment. Il convient donc d'utiliser une lame de phase à changement d'indice sous incidence normale.

Dans le cas d'une lame à changement d'épaisseur, il est possible d'obtenir différentes valeurs de déphasage en changeant l'angle d'inclinaison θ de la lame par rapport au faisceau sans y induire de séparation angulaire. L'inclinaison ou rotation peut se faire autour d'un axe A (figure 8) qui est parallèle aux arêtes de la marche qui délimite le saut de phase ou autour d'un axe B perpendiculaire aux arêtes de la marche et dans un plan parallèle aux deux faces de la lame.

Le déphasage s'écrit en fonction de θ et de θ', avec $\theta' = \arcsin\left(\dfrac{\sin\theta}{n}\right)$, $\Delta e = e_2 - e_1$ étant l'épaisseur du dépôt:

$$\Delta\Phi = \frac{2\pi}{\lambda} \cdot \Delta e \cdot \left[\frac{n}{\cos\theta'} - \frac{1}{\cos\theta} + \sin\theta \cdot (\mathrm{tg}\theta - \mathrm{tg}\theta')\right]$$

A titre d'exemple, on peut effectuer un dépôt de silice fondue sur une lame de silice fondue de qualité optique (qualité de surface : $\lambda/10$) pour une utilisation à $\lambda=244$ nm. Afin d'obtenir une variation de $\pm\pi$ sur la valeur initiale du déphasage (égale à $\pi$) pour une variation angulaire de $\pm45°$, on choisit l'ordre k=4. L'épaisseur $\Delta e = e_2 - e_1$ du dépôt a donc pour valeur :

$$(2k + 1)\frac{\lambda}{2(n - 1)} = 2{,}15 \ \mu m$$

avec n=1,51148 à 244 nm.

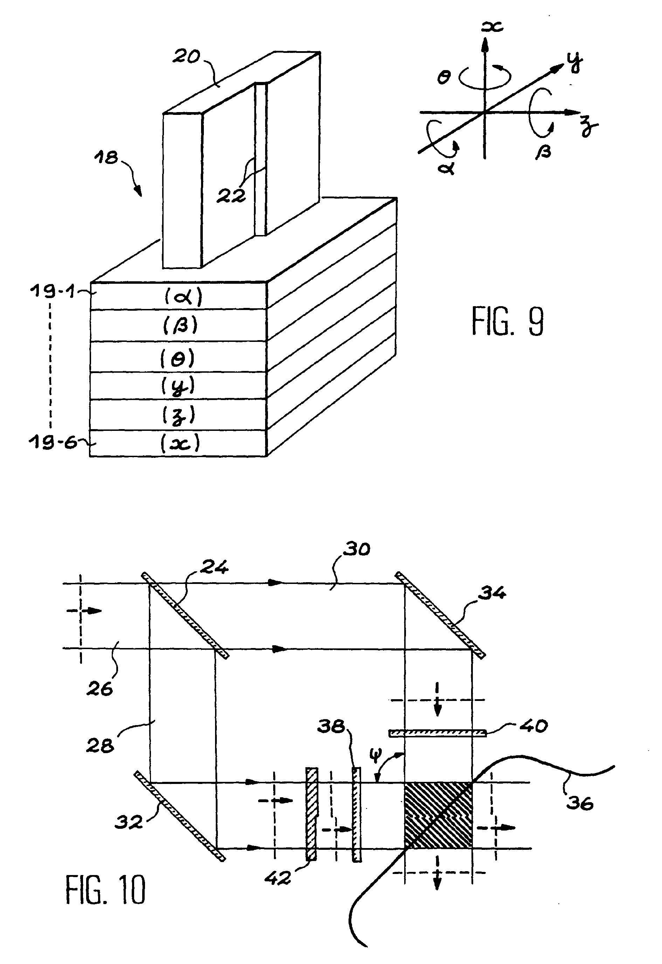

On a représenté sur la figure 9 un dispositif 18 de support d'une lame de phase 20 permettant l'introduction de celle-ci dans un faisceau. Ce dispositif comprend des moyens de réglage qui lui donnent divers degrés de liberté. L'ordre d'empilement de ces moyens de réglage est arbitraire. Dans l'exemple représenté, six moyens de réglage 19-1 à 19-6 correspondant à six degrés de liberté α, β, θ, y, z et x qui sont indiqués sur la figure 9 (« y », « z » . translations suivant des axes perpendiculaires y et z ; « x » : translation suivant un axe x perpendiculaire à y et à z ; « α », « β » et « θ » : rotations autour d'axes respectivement parallèles à y, z et x). Cependant suivant la configuration de la lame, suivant le front d'onde du faisceau incident et suivant le montage interférométrique dans lequel il doit être inséré, le dispositif de support peut avoir plus ou moins de degrés de liberté (z n'est par exemple pas indispensable).

Afin de faciliter l'emploi du dispositif de support un ou plusieurs moyens de réglage sont relié à un ou plusieurs moteurs commandés par un logiciel.

A titre d'exemple on peut régler une lame parallélépipédique grâce à cinq degrés de liberté :

- α et β pour assurer la bonne verticalité des arêtes 22 du saut de matière, chose que l'on peut aussi obtenir par construction,
- x pour positionner la lame dans le faisceau,
- θ pour régler la valeur du déphasage,
- y pour régler la position du saut de phase dans le réseau de Bragg.

On considère maintenant l'introduction d'un tel appareil dans un montage interférentiel. On a choisi de présenter des montages d'inscription de réseaux de Bragg dans des fibres optiques (par exemple des fibres dont le coeur est dopé au $GeO_2$) mais l'invention s'applique aussi à l'inscription de réseaux dans des guides optiques intégrés.

Dans les exemples qui suivent, on montre différentes configurations de montages interférentiels avec l'introduction d'un dispositif à lame de phase permettant l'introduction d'un changement de phase unique dans un réseau de Bragg. On considère deux configurations d'inscription d'un réseau de Bragg. La première est une configuration de séparation d'amplitude dans laquelle les deux faisceaux sont séparés en ce qui concerne l'énergie mais conservent la même forme. La deuxième est une configuration de séparation du front d'onde.

Nous distinguons deux montages pour la configuration de séparation d'amplitude. Le premier correspond au montage holographique décrit dans le document (10) qui comme les autres documents cités par la suite est mentionné à la fin de la présente description.

Le deuxième correspond au montage à trois miroirs (voir le document (1)). Dans ces deux cas, une lame séparatrice 24 (figure 10) divise un faisceau lumineux 26 en deux faisceaux identiques 28 et 30. Un système interférométrique à deux ou trois miroirs (deux miroirs 32 et 34 dans l'exemple de la figure 10) superpose au niveau de la fibre 36 ces deux faisceaux 28 et 30 qui font un angle $\Psi$ déterminé. Les interférences ainsi créées inscrivent le réseau dans la fibre par l'intermédiaire de lentilles cylindriques de focalisation 38 et 40. Il faut placer la lame de phase 42 dans l'un des deux faisceaux qui interfèrent.

D'une manière générale, l'inconvénient du montage de séparation d'amplitude tient à ce qu'il faut régler la lame de phase à chaque modification de la longueur d'onde de Bragg car l'orientation du faisceau d'insolation s'en trouve modifiée. Pour s'affranchir de cet inconvénient il faut que le dispositif (non représenté) de support de la lame soit commandé, suivant les degrés de liberté y et $\theta$ (voir plus haut), par un programme prenant en compte les mouvements des faisceaux du montage qui sont nécessaires au réglage de la longueur d'onde de Bragg.

On considère maintenant des configurations de séparation du front d'onde et tout d'abord un montage interférométrique à prisme. Il convient de noter que la méthode de séparation du front d'onde offre l'avantage de pouvoir placer la lame de phase juste après le système d'expansion du faisceau, avant la séparation du front d'onde. Un avantage important de cette configuration tient à ce que le décalage de phase peut être réglé, par rotation de la lame, indépendamment du réglage de la longueur d'onde de Bragg qui est obtenu par rotation du système interférométrique.

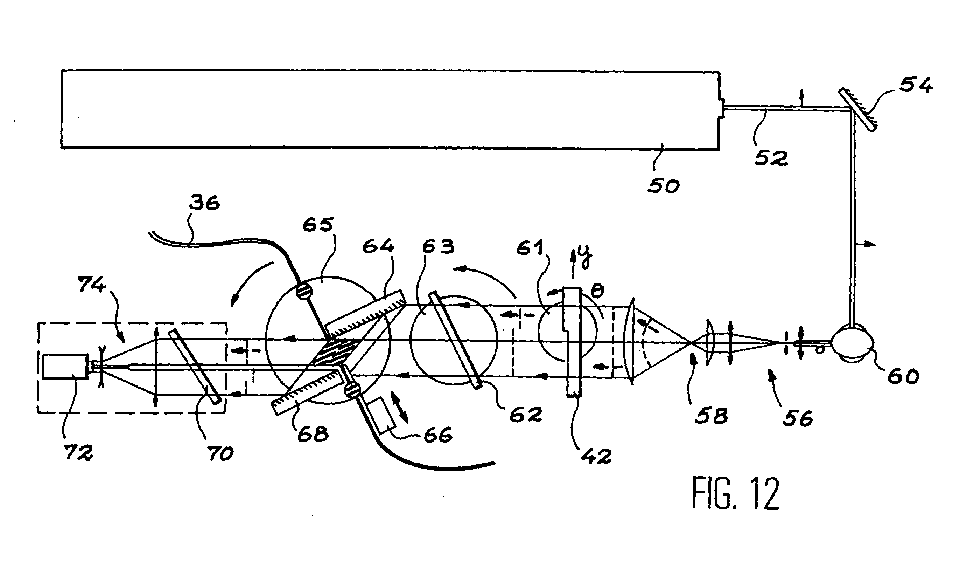

La méthode d'inscription par prisme (voir le document (8)) est schématiquement illustrée par la figure 11 où un faisceau étendu 44 est « replié sur lui même » par réflexion sur une face du prisme 46. Sur la figure 11 la référence 48 représente une lentille cylindrique. On voit que la détermination de la longueur d'onde de Bragg, fixée par l'inclinaison des deux faisceaux qui interfèrent, peut être réglée par rotation du prisme, contre lequel est placée la fibre 36. Si cette rotation se fait autour d'un axe perpendiculaire au plan de la figure et passant par le saut de phase projeté dans la fibre optique, alors la lame de phase 42 placée sur la trajectoire du faisceau 44, avant la lentille 48, n'a pas à être réglée pour les différentes positions du prisme.

On peut aussi utiliser une méthode de séparation du front d'onde qui utilise un miroir de Lloyd (voir le document (11)) et qui est illustrée par la figure 12. Afin de permettre une plus grande flexibilité dans le réglage des paramètres, on utilise un deuxième miroir de renvoi, symétrique du miroir de Lloyd par rapport au centre du réseau, ainsi qu'un système d'acquisition de type caméra CCD, sensible au rayonnement ultraviolet et en particulier à la longueur d'onde d'inscription (244 nm dans notre cas), permettant la visualisation et le réglage des faisceaux d'inscription.

Afin d'inscrire un réseau de Bragg par photosensibilité dans une fibre optique 36, on emploie avantageusement un laser à argon doublé en fréquence 50 qui émet un faisceau 52 de longueur d'onde 244 nm mais d'autres raies du laser, voire d'autres lasers tels qu'un laser excimère KrF ou un laser YAG dopé néodyme quadruplé en fréquence, peuvent également être utilisés.

Le faisceau 52 est réfléchi par une série de miroirs tels que le miroir 54 puis est filtré et étendu par deux télescopes, l'un sphérique 56 et l'autre cylindrique 58 après avoir traversé un périscope 60. Le faisceau traverse ensuite la lame de phase 42 placée sur un dispositif de support 61 à plusieurs degrés de liberté. Le faisceau, dont le front d'onde a été modifié, est ensuite focalisé par une lentille cylindrique 62 dans le coeur de la fibre optique 36. Celle-ci se trouve au bord du miroir de Lloyd 64, qui « replie » les deux demi-parties de faisceau sur elles-mêmes. Ainsi, le faisceau crée des interférences focalisées dans le coeur de la fibre, sur une longueur définie par la position d'un cache 66. La lentille cylindrique 62 et le miroir 64 sont respectivement placés sur deux platines de rotation 63 et 65 qui peuvent être avantageusement motorisées. Leur orientation par rapport au faisceau détermine la longueur d'onde de Bragg du réseau inscrit. Notons que la polarisation du faisceau laser est verticale (normale au plan de travail).

Un second miroir 68, placé symétriquement par rapport au centre du réseau à inscrire, permet de visualiser la répartition d'intensité inscrivant le réseau. Quand le faisceau est focalisé légèrement au-dessus de la fibre, le second miroir renvoie un faisceau divergent semblable à celui qui se propage sans réflexion. Ces deux parties de faisceau sont collimatées par un lentille cylindrique jouant le rôle inverse de la lentille 62 et sont finalement analysées par une caméra CCD 72 munie d'un objectif 74 de grandissement approprié.

La répartition d'intensité dans le plan de la caméra CCD est caractéristique de l'enveloppe de la répartition d'intensité des deux demi-parties de faisceau sur la ligne de focalisation au niveau du miroir de Lloyd. A condition de pouvoir corriger l'effet de la diffraction de Fresnel entre le réseau et la caméra, on peut, à partir de cette répartition, déterminer l'enveloppe de l'intensité du faisceau générant le réseau de Bragg. C'est cette propriété du montage qui permet de régler le positionnement (par l'intermédiaire du degré de liberté y) du ou des sauts de phase dans le réseau avec un contrôle optimum grâce à la figure de diffraction générée par les effets de bord relatifs à chaque saut d'épaisseur de la lame de phase. Lorsque ce réglage est fait, on focalise le faisceau laser dans la fibre optique et l'inscription du réseau de Bragg désiré peut commencer.

Un tel dispositif permet la réalisation de dispositifs à réseaux de Bragg.

A. Fabrication de réseaux de Bragg à saut de phase, à haute sélectivité spectrale.

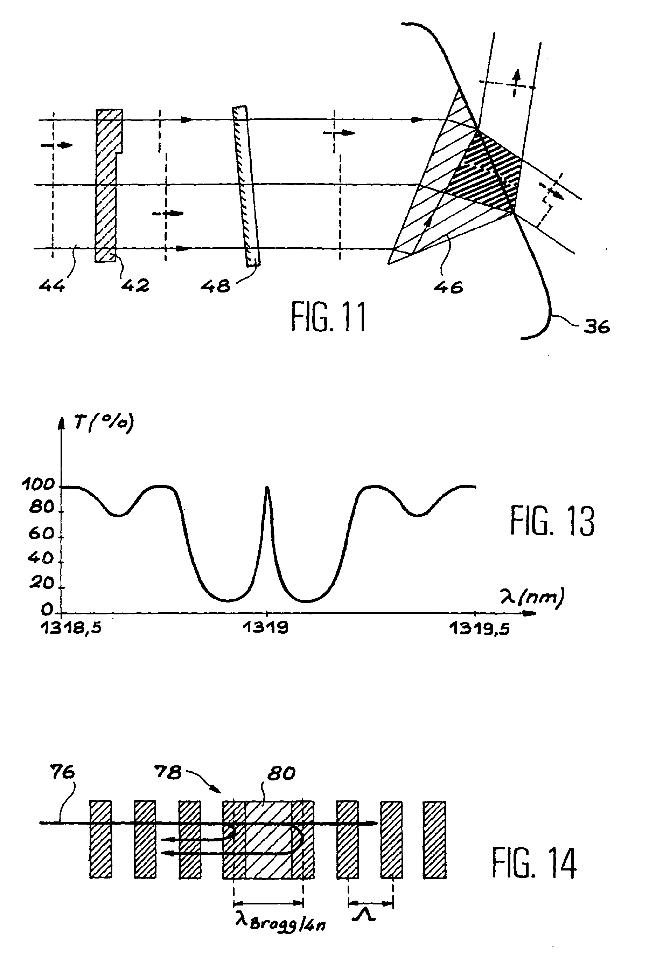

L'une des améliorations du réseau de Bragg a consisté à faire apparaître, dans la bande de longueur d'onde réfléchie, une fine bande secondaire de transmission appelée second pic de transmission. Le composant correspondant, généralement appelé « réseau de Bragg à saut de phase », permet ainsi de transmettre une longueur d'onde bien précise du spectre initial de l'onde guidée dans la bande de longueur d'onde réfléchie (voir la figure 13 à comparer à la figure 1).

Les applications d'un tel composant sont multiples dans les différents domaines où les réseaux de Bragg classiques sont employés. Il permet la réalisation de lasers accordables et de diodes-lasers. On peut aussi l'utiliser dans les systèmes de multiplexage et de démultiplexage en longueur d'onde. De plus sa très grande sélectivité en longueur d'onde en fait un transducteur plus performant que les réseaux classiques. Enfin il constitue un composant nouveau, de caractéristiques propres, qui peut être appliqué de manière simple à la résolution de nombreux problèmes d'optique guidée.

Afin de réaliser ce second pic de transmission, plusieurs techniques ont été mises au point. Toutes reprennent le principe de base d'un désaccord de phase entre deux parties d'un réseau de Bragg classique. L'onde guidée 76 (figure 14) qui traverse un réseau de Bragg classique 78 est réfléchie autour de la longueur d'onde de Bragg $\lambda_{Bragg}$, car la modulation de période $\Lambda$ qui forme le réseau réfléchit de manière distribuée l'onde en phase autour d'une longueur d'onde de résonance (c'est-à-dire $\lambda_{Bragg}$) donnée par la relation $\lambda_{Bragg}=2n.\Lambda$. Il apparaît un phénomène d'interférences constructives tout le long du réseau.

Si l'on forme un changement de phase au centre d'un tel réseau classique (n : indice effectif du mode), les deux moitiés de celui-ci interfèrent de manière destructive l'une par rapport à l'autre. La longueur d'onde ainsi sélectionnée ne peut plus se réfléchir, elle est transmise dans le second pic. Pour que la transmission ait lieu à $\lambda_{Bragg}$ les deux parties qui interfèrent doivent « voir » un déphasage total $\Delta\varphi$ égal à $\pi$ (modulo $2\pi$), d'où le nom de « réseau de Bragg à saut de phase de $\pi$ ».

Si l'on intercale au milieu du réseau une cavité résonante 80 de longueur telle que le déphasage total induit ait une valeur égale à $\pi$, on peut obtenir l'effet désiré. Alors on parle généralement d'un saut de phase de $\pi/2$, déphasage dû à la traversée de la cavité. On parle aussi de déphasage de $\lambda/4$, valeur de la largeur optique de la cavité nécessaire pour produire un déphasage aller-retour de $\pi$.

On peut aussi former un réseau à changement de phase. Dans ce cas, le désaccord de phase n'est plus dû à une cavité mais au changement même de la phase de la modulation périodique qui forme le réseau. Le résultat est alors identique : pour deux modulations déphasées de $\pi$ l'une par rapport à l'autre, un pic de transmission apparaît à la longueur d'onde de Bragg. Dans le cas d'une modulation d'indice d'amplitude $\Delta n_0$ de période $\Lambda$ suivant une abscisse z et pour un réseau de longueur L, avec au centre un déphasage $\Delta\Phi$, la modulation d'indice a la forme suivante :

$$\Delta n(z) \; = \; \Delta n_0.\cos\left(\frac{2\pi}{\Lambda}\, z \, + \, \Phi_1\right) \qquad \text{pour } 0 < z < \frac{L}{2}$$

$$\Delta n(z) \; = \; \Delta n_0.\cos\left(\frac{2\pi}{\Lambda}\, z \, + \, \Phi_1 \, + \, \Delta\Phi\right) \qquad \text{pour } \frac{L}{2} < z < L$$

On étudie maintenant la réponse spectrale d'un réseau de Bragg à saut de phase. On considère le cas d'une modulation périodique de l'indice de propagation dans le coeur d'une fibre optique. La modulation de l'indice est représentée par la formule :

$$\Delta n(z) = \Delta n_0 \cos\left(\frac{2\pi}{\Lambda} z + \Phi(z)\right)$$

avec $\Phi(z)=0$ pour $0<z<z_t$ et $\Phi(z)=\Delta\Phi$ pour $z_t<z<z_f$.

On considère maintenant les modes propagatifs et contra-propagatifs $A^+$ et $A^-$. La modulation de l'indice va jouer le rôle d'une perturbation entraînant un couplage des deux modes. Cela se traduit au travers des équations de couplage :

$$\frac{dA^-}{dz} = j\Omega A^+ e^{j[2\Delta\beta.z + \Phi(z)]}$$

$$\frac{dA^+}{dz} = j\Omega A^- e^{-j[2\Delta\beta.z + \Phi(z)]}$$

$\Omega$ est le coefficient de couplage à la longueur d'onde $\lambda$, dans une fibre de facteur de confinement $\eta$ (proportion d'énergie guidée dans le coeur et intéragissant avec le réseau) : $\Omega = \frac{\pi\Delta n_0}{\lambda} \eta$

$\Delta\beta$ représente l'accord de phase entre la longueur d'onde de propagation et celle de résonance (n étant l'indice de propagation) : $\Delta\beta = \frac{2\pi}{\Lambda} - \frac{4\pi n}{\lambda}$

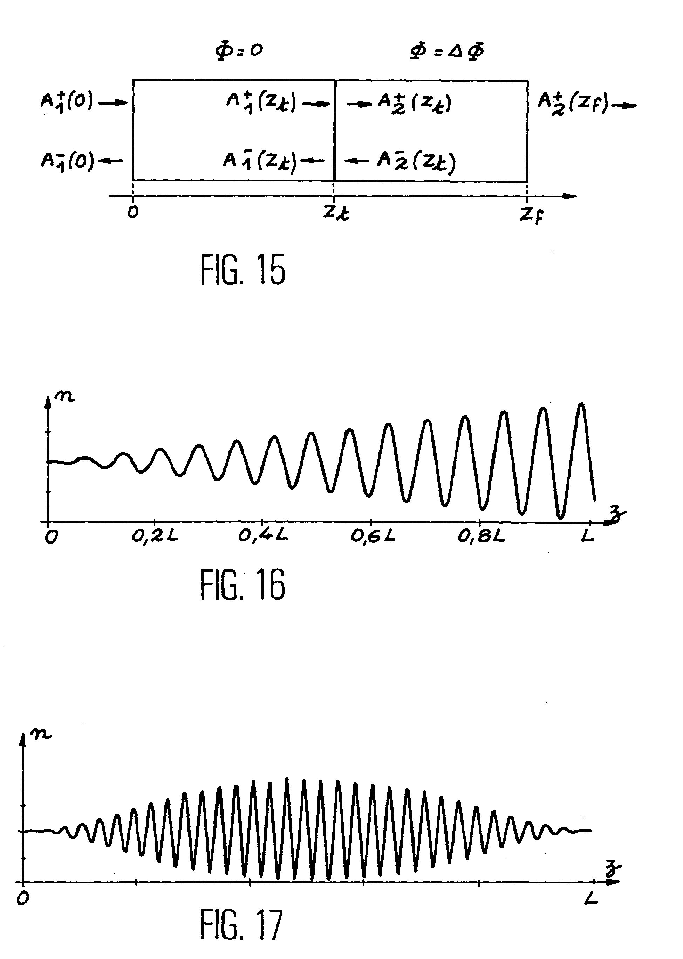

Considérons maintenant les deux réseaux de Bragg classiques juxtaposés à l'abscisse $z=z_t$ avec un saut de phase $\Delta\Phi$. On résout le système d'équations dans les deux zones avec les conditions aux limites définies dans la figure 15 :

$$A_1^+(0) = 1 \qquad A_2^-(z_f) = 0$$

$$A_1^+(z_t) = A_2^+(z_t) \qquad A_1^-(z_t) = A_2^-(z_t)$$

La valeur de $\left|A_2^+(z_f)\right|^2$ fournit alors l'expression de la transmission spectrale du réseau en fonction de la longueur d'onde, de la modulation d'indice $\Delta n_0$, du déphasage $\Delta\Phi$ et des longueurs respectives des deux zones $l=z_t$ et $l'=z_f-z_t$. On montre que la transmission d'un réseau à saut de phase unique s'écrit :

$$T(\lambda, \Delta n_0, \Delta\Phi, l, l') = \frac{\gamma^4}{\Gamma^2 + (C_1 - \Gamma)\left[C_1 - \Gamma(1 - 2\cos(\Delta\Phi))\right] + C_2(C_2 - 2\Gamma\sin(\Delta\Phi))}$$

avec :

$$\gamma^2 = \Omega^2 - \Delta\beta^2 \qquad\qquad L = l + l'$$

**8**

$$S=\sinh(\gamma.l).\sinh(\gamma.l') \qquad C_1=\gamma^2\cosh(\gamma L)$$

$$\Gamma=\Omega^2 S \qquad\qquad C_2=\Delta\beta\gamma\sinh(\gamma L)$$

On peut aisément vérifier que pour $\Delta\Phi=0$ on retrouve bien la formule typique de transmission du réseau de Bragg uniforme.

Si $\Delta\Phi=\pi$ et l=l' la formule se simplifie et l'on obtient :

$$T = \frac{\gamma^4}{\Delta\beta^2\left(\Delta\beta^2\cosh^2(\gamma L) + \gamma^2\sinh^2(\gamma L) - 2\Omega^2\cosh(\gamma L)\right) + \Omega^4}$$

On remarque que si l'on se place à la longueur d'onde de résonance, $\Delta\beta=0$, on a alors T=1 quelles que soient les valeurs de $\Delta n_0$ et de L.

Si $\Delta\Phi=\pi$ et l≠l' la valeur de la transmission à la longueur d'onde de Bragg n'est plus égale à l'unité. On a :

$$T(\lambda_{Bragg}) = \frac{1}{\cosh^2[\Omega(l - l')]}$$

Ainsi le déplacement transverse de la lame de phase dans le faisceau d'inscription permet-il de changer précisément la valeur du coefficient de transmission du filtre à $\lambda_{Bragg}$.

Si $\Delta\Phi\neq\pi$ la position du pic secondaire en transmission n'est plus accordée sur la longueur d'onde de Bragg.

Différentes méthodes sont déjà connues pour la fabrication des réseaux à saut de phase en particulier la méthode qui utilise des masques à changement de phase. Dans le document (4) la méthode utilisée est la lithographie à doublage spatial de fréquence (SFDL) : un réseau est tout d'abord réalisé sur un masque grâce au système de projection de faisceau d'électrons (EBES) puis le réseau de Bragg est inscrit dans le guide par SFDL. Dans le document (7) le réseau de Bragg à saut de phase est inscrit grâce à la méthode du masque de phase. Le masque est constitué d'un réseau avec un saut de phase dans sa période de modulation, qui est transmis par photosensibilité dans le coeur de la fibre et la valeur du saut de phase dans le réseau de Bragg est fixée par celle du réseau du masque. Avec cette deuxième méthode connue les paramètres ne sont pas modifiables de façon directe et donc le coût d'une réalisation bien spécifique et limitée est très élevé car il faut créer un masque pour chaque position spectrale du réseau. Un dispositif d'interférence utilisant une lame de phase est connu des documents EP 0 188 919 et US 4 792 197.

On indique maintenant des avantages du dispositif d'interférence comprenant une lame de phase pour fabriquer ces réseaux à saut de phase dans des fibres optiques (mais l'invention s'applique aussi aux guides optiques intégrés) :

1. Grande « flexibilité » de fabrication : l'ajustement de la fonction de transfert en transmission du réseau à saut de phase, à savoir le niveau de transmission et la position spectrale du pic, est réglé de façon simple et décorrélée. Le premier réglage (transmission) se fait par le décalage de la lame par rapport au demi-front d'onde d'insolation (degré de liberté y) et le second (position spectrale) par la rotation de la lame par rapport au faisceau (degré de liberté $\alpha$ ou $\theta$). La longueur d'onde de Bragg du réseau inscrit est indépendante de la lame. Celle-ci peut donc permettre de réaliser le spectre recherché à n'importe quelle position dans la bande de longueur d'onde habituelle pour de telles applications. De plus, comme seule la phase est influencée, tout type de réseau peut être inscrit (par exemple réseau à pas de modulation variable ou réseau apodisé).

2. Maîtrise du résultat : le réglage des différents paramètres se fait grâce à des mouvements de la lame (avec des platines de rotation et de translation avantageusement motorisées). Comme ces mouvements peuvent être quantifiés très précisément, l'appareil permet une très bonne maîtrise de la réalisation du réseau.

3. Reproductibilité du processus de réalisation : elle est aussi bonne que celle d'un réseau de Bragg classique inscrit par un montage interférométrique car la réalisation d'un réseau à saut de phase se fait en une seule étape.

4. Facilité de mise en oeuvre : la mise en oeuvre de l'appareil est très simple, il suffit de le placer dans le faisceau d'inscription et de procéder aux réglages d'ajustement par les platines de mouvement. Tout comme pour la méthode du masque de phase, l'inscription du réseau se fait en une seule étape ce qui est ici aussi un avantage important face aux autres méthodes.

5. Coût de réalisation : le coût de l'appareil n'est pas très élevé car la fabrication de la lame de phase par dépôt n'est pas chère et son montage sur les platines de mouvement est relativement simple. Comme, de plus, l'appareil permet d'inscrire toutes les longueurs d'onde possibles on peut le juger comme très rentable. L'appareil est aussi économiquement intéressant car il permet de réaliser d'autres composants.

Un avantage de l'appareil vient aussi de ses possibilités d'adaptation. Il permet d'inscrire des réseaux de Bragg à saut de phase aussi bien dans les fibres optiques que dans les guides planaires, voire les semi-conducteurs. Comme la lame n'influe que sur la phase du faisceau, on peut adapter au procédé d'inscription des modifications habituellement employées dans l'inscription des réseaux de Bragg (par exemple l'apodisation de la réponse spectrale qui permet la réduction des lobes spectraux secondaires dans le spectre de transmission).

Si l'on place plusieurs lames de phase dans le trajet du faisceau, on peut inscrire des réseaux de Bragg à sauts de phase multiples dont l'intérêt a déjà été souligné (voir le document (13)).

A titre d'exemple on a inscrit un réseau de Bragg à saut de phase avec les caractéristiques suivantes : longueur du réseau : 10 nm ; puissance d'insolation : 10 mW ; type de fibre optique : SMF28 hydrogénée ; durée d'inscription : 10 minutes. Après l'inscription, on a analysé le spectre avec une source accordable de résolution 1 pm. Le tracé expérimental correspond bien au tracé théorique, fourni par les équations vues plus haut. Le saut de phase est déterminé par la comparaison des deux tracés.

B . Fabrication de réseaux de Bragg effaçables.

Lors de l'inscription d'un réseau de Bragg par une méthode interférométrique telle que celles qui ont été considérées plus haut, il peut arriver que la longueur d'onde de Bragg du réseau inscrit se trouve être différente de celle qui est attendue. Cela est dû à la mauvaise reproductibilité de ces méthodes (en particulier à cause de l'incertitude sur la connaissance de l'angle réel d'inscription). Il peut aussi arriver que, du fait d'une instabilité du montage ou à cause d'une erreur de réglage ou d'une mauvaise connaissance de l'indice effectif de propagation du guide, le réseau inscrit n'ait pas les caractéristiques initialement prévues. Généralement, la fibre où est inscrit ce réseau doit être sacrifiée.

Pour résoudre ce problème, une solution élégante consiste à pouvoir effacer les réseaux n'ayant pas les caractéristiques initialement voulues. Ainsi peut-on inscrire des réseaux-tests dans une fibre sans altérer les propriétés spectrales de celle-ci. De cette manière les méthodes interférométriques gagnent en reproductibilité.

On considère un réseau de Bragg inscrit dans un guide. Il peut être représenté par l'expression :

$$n(z) \; = \; n_0 \; + \; \Delta n_{moy} \; + \; \Delta n_0 . \cos\!\left(\frac{2.\,\pi}{\Lambda} \; . \; z\right)$$

Supposons que l'on inscrive ensuite un réseau identique au précédent à la même position avec seulement un changement de phase de $\pi$ sur la longueur du réseau. On a alors :

$$n(z) \; = \; n_0 \; + \; \Delta n_{moy} \; + \; \Delta n_0 . \cos\!\left(\frac{2.\,\pi}{\Lambda} . z\right) \; + \; \Delta n_{moy} \; - \; \Delta n_0 . \cos\!\left(\frac{2.\,\pi}{\Lambda} . z\right) \; = \; n_0 \; + \; 2.\,\Delta n_{moy}$$

Le terme de modulation a disparu, il ne reste qu'une augmentation moyenne de l'indice. Si l'on observe le spectre de transmission autour de la longueur d'onde de Bragg on ne voit plus d'effet de filtrage. Le réseau de Bragg a été effacé.

Une solution pratique possible serait de déplacer le réseau en translation d'une demi-période afin de réinscrire un réseau en opposition de phase mais cela nécessiterait d'avoir recours à une platine de translation précise à au moins 0,1 micromètre (le pas des interférences est généralement voisin de 0,5 $\mu$m). De plus la translation risquerait de dégrader le réglage de focalisation dans le coeur.

Le dispositif d'interférence comprenant une lame de phase résout ce problème de façon très simple et peu coûteuse. La lame de phase est placée dans le faisceau grâce au dispositif à plusieurs degrés de liberté. La position du saut de phase se trouve en dehors du réseau de sorte que la phase est constante dans celui-ci. On inscrit alors le réseau de la même manière que s'il n'y avait pas de lame. Si la décision est prise d'effacer le réseau, alors on commande au dispositif une translation de la lame de manière à faire un changement de phase de $\pi$ sur l'ensemble du réseau. Dans le cas du montage à miroir de Lloyd cela revient par exemple à venir placer le saut de phase sur l'axe optique du faisceau de manière à déphaser les deux parties interférentes de $\pi$. On prolonge alors l'inscription jusqu'à ce que le spectre du réseau disparaisse. On a finalement l'effet de ce que l'on peut appeler une sur-inscription opposée.

A titre d'exemple, on a inscrit un réseau de Bragg classique de 4 millimètres de longueur dans une fibre optique hydrogénée (140x10$^5$ Pa durant trois semaines). A un niveau donné de l'inscription, on a déplacé le dispositif en translation de manière à sur-inscrire en opposition de phase un réseau identique au précédent. Le coefficient de réflexion décroît après la translation du dispositif pour retrouver sa valeur initiale. Le temps d'effacement du réseau est égal au temps d'inscription et, après l'effacement total du précédent réseau, un nouveau réseau peut s'inscrire en continuité.

On indique maintenant l'intérêt d'un tel dispositif pour fabriquer des réseaux effaçables :

1. Grande « flexibilité » : contrairement à la solution qu'offre la translation, le réglage que l'on fait ici est indépendant de la valeur du pas de la modulation et donc de la longueur d'onde du réseau. Comme on ne change que la phase, on peut appliquer ce principe d'effacement à toutes sortes de réseaux (par exemple aux réseaux « chirpés » (« chirped gratings ») et aux réseaux avec un saut de phase).
2. Maîtrise du résultat : le changement de phase est un paramètre bien maîtrisé grâce à l'appareil. La translation de la lame ne nécessite pas une très grande précision : 0,1 mm est suffisant. A condition de pouvoir suivre l'évolution du spectre en temps réel, on peut effacer le réseau avec la précision souhaitée sur la valeur résiduelle de réflexion.
3. Reproductibilité : elle ne pose pas de problème ici. Puisque le déphasage est maîtrisé, l'effacement se fait de manière reproductible.
4. Facilité de mise en oeuvre : à condition de pouvoir suivre l'évolution des caractéristiques spectrales du réseau en temps réel, l'effacement ne présente aucune difficulté puisqu'il ne nécessite qu'une commande de translation sur le dispositif de support de lame et une obturation du faisceau laser au moment opportun.

Il convient de noter que le calibrage du banc d'inscription peut être fait régulièrement sans altérer le spectre de transmission de la fibre utilisée pour inscrire le réseau de test.

De plus, l'effacement du réseau permet d'obtenir un faible coefficient de réflexion à la fin de l'inscription et non pas au début. Ainsi, le réglage de la focalisation dans le coeur a déjà été faite et ne vient pas perturber la croissance du réseau.

C . Fabrication de réseaux de Bragg à cavité de Fabry-Perot.

Un interféromètre de Fabry-Perot comprend une cavité délimitée par deux miroirs de coefficients de réflexion R1 et R2. Quand une onde lumineuse de longueur d'onde $\lambda$ pénètre dans la cavité il se produit un phénomène de résonance accordé sur le déphasage induit par la cavité. Quand les deux miroirs sont sans pertes et que R1=R2=R, l'intensité à la sortie de l'interféromètre prend la forme classique suivante :

$$I(\lambda) \;=\; \cfrac{1}{1 + \cfrac{4R}{(1 - R)^2} \cdot \sin^2\!\left(\cfrac{2\pi}{\lambda} \cdot n_{cavité} \cdot e\right)}$$

$n_{cavité}$ est l'indice intra-cavité pris égal à l'unité dans le cas de deux miroirs dans l'air et e est la largeur de la cavité. La réponse en nombre d'onde ($\sigma = 1/\lambda$) est une fonction périodique assimilable à un peigne. L'intervalle entre deux pics (ou intervalle spectral libre noté ISL) est donné par la relation :

$$\Delta\sigma \;=\; \frac{1}{2 \cdot n_{cavité} \cdot e}$$

La finesse des raies dépend de la valeur du coefficient de réflexion des deux miroirs et leur hauteur est liée à la différence entre les deux coefficients de réflexion.

Un réseau de Bragg peut être assimilé à un miroir autour de sa longueur d'onde de résonance. Il réfléchit une bande spectrale avec un coefficient de réflexion donné. Si l'on place deux réseaux de Bragg de même période l'un à la suite de l'autre, on crée une cavité de Fabry-Perot. Dans l'exemple d'application A on a considéré l'introduction d'un seul pic secondaire. En ajustant la distance e entre les deux réseaux on peut introduire une série de pics dans la bande réfléchie par l'ensemble des deux réseaux.

Le fait qu'un réseau de Bragg ne soit pas un réflecteur plan, comme un miroir, mais un réflecteur distribué sur toute sa longueur implique que l'intervalle spectral libre d'un réseau à cavité de Fabry-Pérot n'est pas constant.

On peut réaliser la cavité par sur-inscription opposée. Considérons un réseau de Bragg d'amplitude de modulation d'indice $\Delta n_0/2$ avec un changement de phase de $\pi$ à l'abscisse $z=z_1$. On note L la longueur totale du réseau initial, $\Lambda$ la période de modulation et $\Delta n_{moy}$ la variation finale d'indice moyen. On peut représenter ce réseau par l'équation du changement d'indice :

$$\Delta n_1(z) = \frac{\Delta n_{moy}}{2} + \frac{\Delta n_0}{2} . \cos\left(\frac{2\pi}{\Lambda} . z\right) \quad \text{pour } 0 \leq z \leq z_1$$

$$\Delta n_1(z) = \frac{\Delta n_{moy}}{2} - \frac{\Delta n_0}{2} . \cos\left(\frac{2\pi}{\Lambda} . z\right) \quad \text{pour } z_1 \leq z \leq L$$

On considère un autre réseau, identique au premier mais avec un changement de phase à l'abscisse $z_2(z_1 \leq z_2)$. Soit $\Delta n_2(z)$ sa fonction représentative. On écrit la modulation d'indice qui va résulter de la somme de ces deux variations où les deux parties de réseau en opposition de phase s'annulent :

$$\Delta n(z) = \Delta n_1(z) + \Delta n_2(z) = \Delta n_{moy} + \Delta n_0 . \cos\left(\frac{2\pi}{\Lambda} . z\right) \quad \text{pour} \quad 0 \leq z \leq z_1$$

$$\Delta n(z) = \Delta n_1(z) + \Delta n_2(z) = \Delta n_{moy} \quad \text{pour} \quad z_1 \leq z \leq z_2$$

$$\Delta n(z) = \Delta n_1(z) + \Delta n_2(z) = \Delta n_{moy} - \Delta n_0 . \cos\left(\frac{2\pi}{\Lambda} . z\right) \quad \text{pour} \quad z_2 \leq z \leq L.$$

Si l'on prend $z_1 = \frac{L - e}{2}$ et $z_2 = \frac{L + e}{2}$ on a ainsi réalisé un réseau de Bragg à cavité de Fabry-Perot.

Différentes méthodes sont déjà connues pour la fabrication d'un réseau de Bragg à cavité de Fabry-Perot en particulier par le document (9) où il est réalisé par l'inscription de deux réseaux de Bragg successifs espacés de la longueur de la cavité. L'accord sur l'intervalle spectral et sur la position des pics est obtenu grâce à une insolation uniforme de la cavité qui modifie la valeur de l'indice de propagation dans cette zone. La méthode nécessite l'inscription du réseau à cavité de Fabry-Perot en trois étapes. Il est notamment nécessaire d'inscrire deux réseaux successifs, ce qui augmente la difficulté de réalisation.

Le dispositif d'interférence comprenant une lame de phase permet la réalisation d'un réseau à cavité de Fabry-Pérot par une sur-inscription opposée. Le dispositif permettant de positionner un saut de phase de $\pi$ dans un réseau, il suffit de placer un tel dispositif à une certaine abscisse pendant un temps $t_1$ puis à une autre abscisse pendant un temps $t_2$ pour pouvoir réaliser une cavité de Fabry-Perot. Afin de déterminer la durée totale d'inscription, il est nécessaire de qualifier $\Delta n(t)$ dans le cadre du protocole expérimental de réalisation du réseau de Bragg à cavité de Fabry-Perot.

On détermine tout d'abord les conditions expérimentales du réseau à cavité de Fabry-Pérot à inscrire : les longueurs $l_1$ et $l_2$ des deux réseaux de Bragg et leurs coefficients de réflexion $R_1$ et $R_2$, la longueur de la cavité e, le type de fibre et la puissance d'insolation. Tous ces paramètres permettent de tracer le spectre grâce à une méthode matricielle (voir le document (12)) et ainsi de prévoir la forme de la réponse spectrale du réseau à cavité de Fabry-Perot.

Pour le calcul de l'intervalle spectral libre on a besoin de connaître la longueur de la cavité ainsi que la valeur du changement d'indice moyen. On peut procéder de la façon suivante :

On déduit $\Delta n_0$ par la relation :

$$\Delta n_0 \;=\; \frac{\lambda_{Bragg}}{\pi.\,\eta.\,l_i} \,.\, \arg\, \tanh\!\left(\sqrt{R_i}\right) \qquad\qquad avec\ i=1,2$$

où $\eta$ est le facteur de confinement de l'onde guidée dans le coeur. La longueur totale L du réseau est donnée par : $L=l_1+e+l_2$. A cette longueur L et à cette modulation d'indice correspond un coefficient de réflexion R donné par :

$$R \;=\; \tanh\!\left(\frac{\pi.\,\Delta n_0}{\lambda_{Bragg}} \,.\, \eta.\,L\right)$$

On inscrit donc un réseau de longueur L pour avoir un coefficient de réflexion R. Soit $t_{total}$ le temps d'insolation mesuré. Durant cette inscription la longueur d'onde de Bragg a subi un décalage $\Delta\lambda_{Bragg}$ correspondant à l'élévation de la valeur de l'indice moyen $\Delta n_{moy}$ :

$$\Delta n_{moy} \;=\; \frac{\Delta\lambda_{Bragg}}{2.\,\Lambda}$$

On peut ainsi déterminer l'intervalle spectral libre :

$$\Delta\sigma \;=\; \frac{1}{2.\,(n_0 \,+\, \Delta n_{moy})\,.\,e}$$

Si la valeur de l'ISL ne convient pas on a deux possibilités : soit changer e et reprendre une inscription pour déterminer la nouvelle valeur de $t_{total}$, soit continuer le processus et finir l'inscription par une insolation uniforme de la cavité qui aura pour effet d'augmenter l'indice moyen.

Les temps d'insolation des deux réseaux opposés en phase sont égaux : $t_1 \;=\; t_2 \;=\; \frac{t_{total}}{2}$.

Les premiers réseaux de test peuvent être effacés par la méthode décrite plus haut. On peut maintenant inscrire le réseau à cavité Fabry-Perot. On place le saut de phase à la distance $l_1$ du bord du réseau grâce au dispositif d'interférence comprenant une lame de phase et on inscrit un réseau pendant un temps $t_1$ puis on déplace la lame par translation grâce à son dispositif de support sur une distance e et on prolonge l'inscription d'un temps $t_2$. Le réseau de Bragg à cavité Fabry-Perot est inscrit.

On indique maintenant l'intérêt d'un tel dispositif pour fabriquer un tel réseau de Bragg.

1. « Flexibilité » de fabrication : on peut inscrire n'importe quelle longueur d'onde de Bragg tout comme pour le réseau à saut de phase. La longueur de la cavité, tout comme la longueur des deux réseaux, est limitée par la taille maximale d'un réseau de Bragg pouvant être inscrit par le montage interférométrique utilisé. Elle n'est pas limitée par l'appareil. Ce dernier offre la possibilité de régler la longueur de la cavité avec la précision offerte par le réglage en y. En jouant sur la durée totale d'inscription et sur la longueur relative des deux réseaux on peut choisir les coefficients de réflexion de ces réseaux. On voit donc que la plupart des paramètres sont accessibles avec une grande « flexibilité ».

2. Reproductibilité : il n'y a pas de problème de reproductibilité lié à la valeur de la longueur d'onde des deux réseaux de Bragg puisqu'ils ont la même période. C'est un avantage par rapport aux méthodes connues.

D. L'invention s'applique à la fabrication d'un réseau de Bragg à enveloppe de modulation d'indice particulière.

On peut écrire l'équation d'un réseau de Bragg non uniforme sous la forme :

$$\Delta n(z) = \Delta n_{moy}(z) + \Delta n_{mod}(z) \cdot \cos\left(\frac{2.\pi}{\Lambda} \cdot z\right)$$

$\Delta n_{moy}(z)$ est la répartition d'indice moyen(en fonction de l'abscisse z), $\Delta n_{mod}(z)$ est l'enveloppe de modulation d'indice du réseau de Bragg et $\Lambda$ est la période de la modulation.

La réalisation de réseaux non uniformes permet d'obtenir des composants plus évolués. Il est par exemple souvent souhaitable d'effectuer une apodisation des réseaux. Un réseau apodisé présente dans son spectre de transmission des rebonds très réduits autour du pic central ce qui en fait un composant particulièrement intéressant pour tous types d'applications.

Considérons maintenant le principe de la sur-inscription déphasée dynamique : on reprend ici le principe de base présenté dans les exemples d'application B et C (inscription successive de deux réseaux avec des parties en opposition de phase) à la différence près que la sur-inscription se fait sur des temps variables et pour un positionnement et une valeur du saut de phase variables. Analytiquement cela revient à considérer une croissance de réseau définie par la relation :

$$\Delta n(z,\ T)\ =\ \int_0^T \left[ a(z,\ t)\ +\ b(z,\ t)\ \cdot\ \cos\left(\frac{2.\pi}{\Lambda}\ \cdot\ z\ +\ \Phi(z,\ t)\right) \right] \cdot dt$$

avec $a(z,t) = \dfrac{\partial \Delta n_{moy}}{\partial t}(z,\ t)$ et $b(z,t) = \dfrac{\partial \Delta n_{mod}}{\partial t}(z,\ t)$ .

$a(z,t)$ caractérise la cinétique de croissance du changement d'indice moyen dans le réseau, dépend de nombreux paramètres (par exemple puissance d'insolation et type de fibre) et peut être déterminé par l'étude de l'évolution de la longueur d'onde de Bragg lors de l'inscription d'un réseau de test.

$b(z,t)$ caractérise la cinétique de croissance de l'enveloppe de modulation de l'indice dans le réseau, dépend de nombreux paramètres et peut être déterminé par l'étude de l'évolution du coefficient de réflexion maximal lors de l'inscription d'un réseau de test.

$\Phi(z,t)$ est la fonction définie par le positionnement et l'inclinaison de la lame ou des lames. C'est une fonction par paliers.

L'évolution de l'indice moyen n'est pas modifiable avec l'invention. On s'intéresse donc uniquement à la valeur de la modulation de l'indice

$$\Delta n_{per.}(z,\ T)\ =\ \int_0^T b(z,\ t)\ \cdot\ \cos\left[\frac{2\pi}{\Lambda}\ \cdot\ z\ +\ \Phi(z,\ t)\right] \cdot dt.$$

On peut écrire :

$$\Delta n_{per}(z, T) = \left\{ \int_0^T \left[ b(z, t) \cdot \cos\left(\Phi(z, t)\right) \right] \cdot dt \right\} \cdot \cos\left(\frac{2 \cdot \pi}{\Lambda} \cdot z\right)$$

$$- \left\{ \int_0^T \left[ b(z, t) \cdot \sin\left(\Phi(z, t)\right) \right] \cdot dt \right\} \cdot \sin\left(\frac{2 \cdot \pi}{\Lambda} \cdot z\right)$$

On voit que ce terme de modulation est la somme de deux modulations d'amplitudes déterminées par la fonction $\Phi$ (z,t). On donne un cas particulier d'application lorsque $\Phi$ prend pour valeur 0 ou $\pi$. On considère d'abord une sur-inscription opposée dynamique à saut unique. On définit :

$$\Phi(z, t) = \pi \quad \text{si} \quad 0 \leq z \leq z_\pi(t)$$

$$\Phi(z, t) = 0 \quad \text{si} \quad z_\pi(t) \leq z \leq L \quad (L : \text{longueur du réseau de Bragg}).$$

La fonction $z_\pi(t)$ définit le mouvement du saut de phase. La croissance du réseau à l'abscisse z est fonction du temps respectif de modulation déphasée ($t_\pi(z)$) ou non déphasée ($t_0(z)$) que voit cette partie élémentaire du réseau.

On note T la durée totale de l'inscription. On note $\Delta n_{mod}^T(z)$ l'amplitude de modulation d'indice finale du réseau à l'abcisse z. On peut écrire :

$$\Delta n_{mod}^T(z) = \left| \int_0^{t_0(z)} b(z, t) \cdot dt - \int_{t_0(z)}^T b(z, t - t_0(z)) \cdot dt \right|$$

On définit A(z) la fonction normée d'enveloppe de modulation : $\Delta n_{mod}^T(z) = \Delta n_0 \times A(z)$ . D'une ma-nière générale on note $A_0$ la valeur minimale de cette fonction. A(z) est la fonction que l'on cherche à obtenir dans le réseau. Pour cela, la connaissance de la cinétique de croissance de la modulation d'indice est nécessaire. Par hypothèse on supposera cette fonction de croissance connue et indépendante de l'abscisse dans le réseau. On pose :

$$\Delta n_{mod}(t_0) = \int_0^{t_0} b(t) \cdot dt$$

d'où :

$$A(z) = \left| \frac{\Delta n_{mod}(T - t_0(z))}{\Delta n_0} - \frac{\Delta n_{mod}(t_0(z))}{\Delta n_0} \right|$$

Dans la pratique, deux cas sont possibles et correspondent à deux choix de mouvement du saut de phase (déplacement puis repos ou l'inverse). Ces deux mouvements donnent un résultat identique.

On considère maintenant le cas :

$$A(z) = \frac{\Delta n_{mod}(T - t_0(z))}{\Delta n_0} - \frac{\Delta n_{mod}(t_0(z))}{\Delta n_0}$$

Ce choix définit l'intervalle temporel de mouvement du saut de phase :

$A(z) \geq A_0$ implique $\Delta n_{mod}(T-t_0(z)) \leq \Delta n_{mod}(T-t_0(z)) - \Delta n_0 x \Delta_0$ ce qui implique $t_0(z) \leq t_{sup}$
$A(z) \leq 1$ implique $\Delta n_{mod}(t_0(z)) \geq \Delta n_{mod}(T-t_0(z)) - \Delta n_0$ ce qui implique $t_0(z) \geq t_{inf}$.

On en déduit :

$$z_\pi(t) = A^{-1}(1) \qquad\qquad \text{pour} \quad 0 \leq t \leq t_{inf}$$

$$z_\pi(t) = A^{-1}\left[\frac{\Delta n_{mod}(T - 1)}{\Delta n_0} - \frac{\Delta n_{mod}(t)}{\Delta n_0}\right] \qquad \text{pour} \quad t_{inf} \leq t \leq t_{sup}$$

$$z_\pi(t) = A^{-1}(A_0) \qquad\qquad \text{pour} \quad t_{sup} \leq t \leq T.$$

On voit donc que la réalisation d'une modulation d'indice suivant la fonction A(z) dans le cas d'une méthode à sur-inscription opposée dynamique à saut unique ne peut se faire que dans le cas où A(z) est une fonction inversible.
Si A(z) n'est pas définie sur un intervalle de bijection une autre méthode doit être appliquée. Il faut découper cet intervalle en parties de bijection. Le nombre de sauts de phase à placer dans le faisceau est alors égal au nombre d'intervalles de bijection.
Soit N le nombre de bijections, soit i le numéro de l'intervalle de bijection de A (z) [$z_{i-1}$; $z_i$].

On définit $\Delta n_0^i$ : $\Delta n_0^i = \max(\Delta n_0 . A(z))$ dans [$Z_{i-1}$;$Z_i$] et $A_i(z)$ : application de [O;$z_i$-$z_{i-1}$] dans [O;1] qui à

z associe $\dfrac{\Delta n_0}{\Delta n_0^i} . A(z_{i-1} + z)$ .

Ce problème se résout de la même manière que dans le cas du saut unique. Il faut pour cela déterminer le mouvement des N sauts de phase en appliquant les formules à une série de fonctions $z_\pi^i(t)$ définies par rapport à chaque origine $z_{i-1}$. Quelle que soit la forme de A(z), la méthode de sur-inscription opposée dynamique à sauts multiples permet donc la réalisation du réseau correspondant.
Considérons maintenant la réalisation d'une enveloppe de modulation d'indice particulière grâce à l'invention. La translation en y du dispositif de support de lame permet le positionnement du saut de phase en n'importe quel endroit du réseau. Un moteur commandé par un logiciel permet donc d'assurer le mouvement $z_n(t)$ et ainsi d'induire une modification sur l'enveloppe de modulation de l'indice du réseau.
Au cas où la fonction A(z) n'est pas définie sur un intervalle de bijection il est possible de placer une série de dispositifs munis de lames les uns à la suite des autres pour réaliser la modification par la méthode des sauts multiples. De même que pour un dispositif unique de support, la commande des différents moteurs permet la réalisation du composant. Cette réalisation nécessite la connaissance précise de la fonction de croissance du réseau : $\Delta n_{mod}(t)$. Cette connaissance peut se faire par l'étude d'un réseau de test dont on mesure l'évolution du facteur de réflexion par rapport au temps. Cette mesure doit se faire à la même puissance que celle utilisée ultérieurement pour la réalisation du réseau de forme A(z). On déduit la fonction recherchée par la relation :

$$\Delta n_{mod}(t) = \frac{\lambda_{Bragg}}{\pi.\,\eta.\,L} . \arg\, \tanh\left(\sqrt{R(t)}\right)$$

(voir plus haut l'inscription d'un réseau de Bragg à cavité de Fabry-Perot).

D'une manière plus simple on peut aussi réaliser une approximation de la fonction A(z) en supposant la croissance de l'indice de modulation linéaire par rapport au temps. Dans ce cas la formulation des équations en est grandement facilitée.

On indique maintenant l'intérêt de l'invention pour la fabrication d'un réseau de Bragg ayant une enveloppe de modulation d'indice particulière.

1. « Flexibilité » de fabrication : on peut inscrire un réseau de Bragg de période spatiale constante ou variable (« chirp ») à n'importe quelle longueur d'onde de Bragg et n'importe quelle allure d'enveloppe de modulation d'indice ou d'indice moyen, à condition de placer de manière appropriée un nombre suffisant de dispositifs de support munis de lames de phase.

2. Facilité de mise en oeuvre : la réalisation du réseau est simple. Il suffit de mesurer la fonction de croissance d'un réseau à une puissance donnée, puis d'inverser la fonction A(z) à réaliser. Chaque dispositif de support de lame muni de son logiciel de commande gère alors le déplacement de la lame correspondante.

Il convient de noter que la fonction de croissance de l'indice de modulation par rapport au temps peut être déterminée de manière expérimentale.

On donne maintenant quelques exemples d'applications. Pour les exposer facilement on considère le cas de l'approximation linéaire : $\Delta n_{mod}(t) = a.t$.

a) On peut chercher à inscrire un réseau avec une enveloppe de modulation linéaire du genre de la figure 16. Dans le cas de l'approximation linéaire on définit le mouvement du saut de phase de la façon suivante :

$$z_{\pi(t)} = \frac{2.\,L}{T}.\,t \;\; pour \;\; 0 \leq t \leq \frac{T}{2} \;\; et \;\; z_{\pi}(t) = L \;\; pour \;\; \frac{T}{2} \leq t \leq T.$$

b) On peut chercher à apodiser un réseau de Bragg. On choisit une enveloppe de forme gaussienne :

$$A(z) = \exp[-(z-L/2)^2/(L/N)^2]$$

Le réseau a alors la forme donnée à la figure 17 lorsque N=4. Une telle forme permet d'apodiser le réseau ou plus précisément sa réponse spectrale. Dans le spectre de réflexion de ce réseau les lobes secondaires sont réduits par rapport à un réseau classique.

Dans l'exemple considéré, A(z) n'est pas défini sur un intervalle de bijection. On définit donc deux fonctions :

Intervalle 1 : [0;L/2] :

$$A_1(z) = \exp[-(z-L/2)^2/(L/N)^2] \;\; pour \;\; z \;\; appartenant \;\; à \;\; [0;L/2]$$

$$A_0^1 \;=\; 0$$

$$An_0^1 \;=\; \Delta n_{mod}(T)$$

Intervalle 2 : [L/2;L] :

$$A_1(z) = \exp[-(z^2/L/N)^2] \qquad \text{pour } z \text{ appartenant à } [0;L/2]$$

$$A_0^2 \;=\; 0$$

$$An_0^2 \;=\; \Delta n_{mod}(T)$$

On en déduit le mouvement des deux sauts de phase :

Intervalle 1 :

$$z_\pi^1(t) \;=\; \frac{L}{2} \cdot \left[1 \;-\; \frac{2}{N} \cdot \sqrt{\ln\left(\frac{T}{T-2.t}\right)}\right] \qquad \text{pour } 0 \leq t < \frac{T}{2}$$

$$z_\pi^1(t) \;=\; 0 \qquad \text{pour } \frac{T}{2} \leq t \leq T$$

Intervalle 2 :

$$z_\pi^2(t) \;=\; \frac{L}{2} \cdot \left[1 \;+\; \frac{2}{N} \cdot \sqrt{\ln\left(\frac{T}{T-2.t}\right)}\right] \qquad \text{pour } 0 \leq t < \frac{T}{2}$$

$$z_\pi^2(t) \;=\; L \qquad \text{pour } \frac{T}{2} \leq t \leq T$$

Les documents cités dans la présente description sont les suivants :

(1) C.G. Askins, T.-E. Tsai, G.M. Williams, M.A. Putnam, M. Bashkansky et E.J. Friebele, « Fiber Bragg reflectors prepared by a single excimer pulse », Optics Letters, 17, 11, (1992), pp.833-835

(2) F. Bilodeau, K.O. Hill, B. Malo, D.C. Johnson et J. Albert, « High-return-loss narrowband all-fiber bandpass Bragg transmission filter », IEEE Phot. Tech. Lett, 6, 1, (1994), pp.80-82

(3) I. Baumann, J. Seifert, W. Nowak et M. Sauer, « Compact all-fiber Add-Drop-Multiplexer using Fiber Bragg Gratings », IEEE Phot. Tech. Lett., 8, 10, (1996), pp.1331-1333

(4) C.H. Henry, Y. Shani, R.C. Kistler, T.E. Jewell, V. Pol, N.A. Olsson, R.F. Kazarinov, K.J. Orlowsky, « Compound Bragg reflection filters made by spatial frequency doubling lithography », J. Lightwave Technol., 7, 9, (1989), pp. 1379-1385

(5) K.O. Hill, D.C. Johnson, F. Bilodeau et S. Faucher, « Narrow-bandwidth optical waveguide transmission filters », Electron. lett., 23, 9, (1987), pp. 465-466

(6) R. Kashyap, G.D. Maxwell et B.J. Ainslie, « Laser-trimmed four-port bandpass filter fabricated in single-mode photosensible Ge-doped planar waveguide », IEEE Phot. Tech. Lett., 5, 2, (1993), pp.191-194

(7) R. Kashyap, P.F. McKee et D. Armes, « UV written reflection grating structures in photosensitive optical fibres using phase-shifted phase masks », Electron. Lett., 30, 23, (1994), pp.1977-1978

(8) S. Legoubin, M. Douay, P. Bernage, P. Niay, J.F. Bayon et T. Georges, « Photoinscription de filtres de Bragg dans des fibres dopées à l'oxyde de germanium », J. Optics., 23, 4, (1992), pp.143-156

(9) S. Legoubin, M. Douay, P. Bernage, P.Niay, J.F. Bayon, T. Georges, J. Opt. Soc. Am., A12, (1995), p.1687

(10) G. Meltz, W.W. Morey et W.H. Glenn, « Formation of Bragg gratings in optical fibers by a transverse holographic method », Optics Letters, 14, (1989), pp.823-825

(11) I. Riant, p. Sansonetti, H. Fevrier, S. Artigaud, « Réalisation d'un filtre de Bragg photo-inscrit dans une fibre optique à l'aide d'un montage interférométrique constitué d'un miroir unique », Communication aux JNOG, (1993), Marseille, Session 2.

(12) M.Yamada et K. Sakuda, « Analysis of almost-periodic distributed feedback slab waveguides via a fundamental matrix approach », Applied Optics, 26, 16, (1987), pp.3474-3478.

(13) R. Zengerle et O. Leminger, « Phase-shifted Bragg-Grating Filters with Improved Transmission Characteristics », J. Lightwave Technol., 13, 12, (1995), pp.2354-2358.

**Revendications**

1. Procédé d'inscription, dans un substrat transparent (36) formant guide de lumière, notamment dans une fibre optique, d'un réseau de Bragg formant un filtre spectral vis-à-vis d'une onde lumineuse qui le traverse, procédé selon lequel on transfère directement dans le substrat, par un phénomène de photosensibilité utilisé au sein même dudit substrat, la figure des interférences entre deux faisceaux lumineux (28, 30) angulairement décalés, de même longueur d'onde et cohérents, cette figure d'interférences étant transférée, dans le substrat, sous la forme d'une modulation d'indice de réfraction de ce substrat, procédé selon lequel au moins l'un desdits faisceaux lumineux est divisé en au moins deux sous-faisceaux par une lame de phase ajustable en position et en orientation, induisant un décalage de phase de l'un des sous-faisceaux par rapport à l'autre, apte à générer un décalage de phase correspondant dans le réseau de Bragg, ce procédé comportant en outre une étape de mouvement contrôlé de translation et/ou de rotation de la lame de phase, au cours de -l'exposition dudit substrat auxdits faisceaux interférents, de manière à produire une variation programmée de la position du décalage de phase et/ou une variation de la valeur de ce décalage de phase dans le faisceau, lumineux formé par les deux sous-faisceaux au cours de la photo-inscription.

2. Procédé selon la revendication 1, dans lequel la figure des interférences est transférée selon une configuration à séparation d'amplitude.

3. Procédé selon la revendication 1, dans lequel la figure des interférences est transférée selon une configuration à séparation du front d'onde.

4. Procédé de photo-inscription d'un réseau de Bragg à enveloppe de modulation d'indice linéaire selon l'une quelconque des revendications 1 à 3, dans lequel la loi de programmation du mouvement de la lame de phase pendant la photo-inscription est une translation z(t) de la lame parallèlement au front d'onde selon une loi du type :

$$z(t) = 2.L/T.t \text{ pour } 0 \leq t \leq T/2$$

$$z(t) = L \text{ pour } T/2 \leq t \leq T$$

où L est la longueur de la figure d'interférence et T la durée totale de l'inscription.

5. Procédé de fabrication d'un réseau de Bragg avec une enveloppe de modulation d'indice gaussienne selon l'une quelconque des revendications 1 à 3, dans lequel la loi de programmation du mouvement de la lame de phase pendant la photo-inscription est une translation z(t) de la lame parallèlement au front d'onde selon une loi du type :

dans l'intervalle 1 [0 ; L/2]:

$$Z1(t) = L/2 \ [ \ 1 - 2/N \ . \sqrt{\ln(T/(T-2.t))} \ ] \ \text{pour } 0 \leq t \leq T/2$$

$$Z1(t) = 0 \ \text{pour } T/2 \leq t \leq T$$

dans l'intervalle 2 [L/2 ; 1 L]:

$$Z2(t) = L/2 \ [ \ 1 + 2/N \ . \sqrt{\ln(T/(T-2.t))} \ ] \ \text{pour } 0 \leq t \leq T/2$$

$$Z2(t) = L \ \text{pour } T/2 \leq t \leq T$$

où L est la longueur de la figure d'interférence T est la durée totale de l'inscription, et N est le nombre de bijections permettant de définir la fonction normée d'enveloppe de modulation.

**Claims**

1. Process for writing a Bragg grating in a transparent substrate (36) forming a light guide, particularly in an optical fibre, the Bragg grating forming a spectral filter with regard to a light wave that passes through it, process according to which the interference pattern between two light beams (28, 30) with the same wavelength and coherent with each other but with an angular offset, is transferred directly into the substrate due to a photosensitivity phenomenon within the same said substrate, this interference pattern being transferred in the substrate in the form of a modulation of the refraction index of this substrate, process in which at least one of the said light beams is divided into at least two sub-beams inducing a phase shift of one of the sub-beams relative to the other, able to generate a corresponding phase shift in the Bragg grating, said process also comprising a controlled phase splitter translation and/or rotation movement stage during the exposure of said substrate to said interfering beams, so as to produce a programmed variation of the phase shift position and/or a variation of the value of said phase shift in the light beam formed by the two sub-beams during the photo-writing.

2. Process according to claim 1, wherein the interference pattern is transferred according to an amplitude separation configuration.

3. Process according to claim 1, wherein the interference pattern is transferred according to a wave front separation configuration.

4. Process for the photo-writing of a linear index modulation envelope Bragg grating according to any one of the claims 1 to 3, wherein the law of programming the movement of the phase splitter during the photo-writing is a translation z(t) of the splitter parallel to the wave front in accordance with a law of the type:

$$z(t) = 2.L/T.t \ \text{for } 0 \leq t \leq T/2$$

$$z(t) = L \text{ for } T/2 \leq t \leq T$$

in which L is the length of the interference pattern and T the total duration of the writing.

5. Process for the production of a Bragg grating having a Gaussian index modulation envelope according to any one of the claims 1 to 3, wherein the law of programming the movement of the phase splitter during photo-writing is a translation z(t) of the splitter parallel to the wave front according to a law of the type:

in interval 1 [0; L/2]:

$$Z1(t) = L/2 \ [1-2/N \cdot \quad \ln(T/(T-2.t)] \text{ for } 0 \leq t \leq T/2$$

$$Z1(t) = 0 \text{ for } T/2 \leq t \leq T$$

in interval 2 [L/2; L]:

$$Z2(t) = L/2 \ [1+2/N \cdot \quad \ln(T/(T-2.t)] \text{ for } 0 \leq t \leq T/2$$

$$Z2(t) = L \text{ for } T/2 \leq t \leq T$$

in which L is the length of the interference pattern, T the total duration of writing and N the number of bijections making it possible to define the standardized modulation envelope function.

**Patentansprüche**

1. Verfahren zum Herstellen bzw. Photoinduzieren eines Bragg-Gitters, das einen Spektralfilter gegenüber einer es durchquerenden Lichtwelle bildet, in ein Lichtleiterbildendes Substrat (36), insbesondere in eine optische Faser, wobei man bei diesem Verfahren durch ein im Innern selbst des genannten Substrats angewendetes Photosensibilitätsphänomen die Figur der Interferenzen zwischen zwei winkelmäßig verschobenen kohärenten Lichtstrahlen (28, 30) derselben Wellenlänge direkt in das Substrat überträgt und diese Interferenzfigur dabei in Form einer Modifikation der Brechzahl des Substrats in dieses Substrat übertragen wird, wobei bei diesem Verfahren wenigstens einer der genannten Lichtstrahlen geteilt wird durch eine Phasenplatte mit justierbarer Position und Orientierung, die eine Phasenverschiebung eines der Teilstrahlen in Bezug auf den anderen bewirkt, fähig eine entsprechende Phasenverschiebung in dem Bragg-Gitter zu erzeugen, wobei dieses Verfahren, während das genannte Substrat den genannten Interferenzstrahlen ausgesetzt ist, außerdem einen Schritt einer kontrollierten Translations- und/ oder Rotationsbewegung umfasst, um während der Photoinduktion in dem durch die beiden Teilstrahlen gebildeten Lichtstrahl eine programmierte Veränderung der Position der Phasenverschiebung und/oder eine Veränderung des Werts dieser Phasenverschiebung zu erzeugen.

2. Verfahren nach Anspruch 1, bei dem die Figur der interferenzen entsprechend einer Amplitudentrennungskonfiguration übertragen wird.

3. Verfahren nach Anspruch 1, bei dem die Figur der Interferenzen entsprechend einer Wellenfrontkonfiguration übertragen wird.

4. Verfahren zur Photoinduktion eines Bragg-Gitters mit linearer Brechzahlmodulationshüllkurve nach einem der Ansprüche 1 bis 3, bei dem das Programmierungsgesetz der Bewegung der Phasenplatte während der Photoinduktion eine zu der Wellenfront parallele Translation z(t) ist, entsprechend einem Gesetz des Typs:

$$z(t) = 2.L/T.t \ \text{für} \ 0 \leq t \leq T/2$$

$$z(t) = L \ \text{für} \ T/2 \leq t \leq T$$

wo L die Länge der Interferenzfigur ist und T die Gesamtdauer der Photoinduktion.

5. Verfahren zur Herstellung eines Bragg-Gitters mit einer gaußschen Brechzahlmodulationshüllkurve nach einem der Ansprüche 1 bis 3, bei dem das Programmierungsgesetz der Bewegung der Phasenplatte während der Photoinduktion eine zu der Wellenfront parallele Translation z(t) ist, entsprechend einem Gesetz des Typs:

in dem Intervall 1 [0 ; L/2]:

$$Z1(t) = L/2 \left[ 1 - 2/N \ . \ \sqrt{\ln(T/(T-2.t))} \right]$$

für

$$0 \leq t \leq T/2$$

$$Z1(t) = 0 \ \text{für} \ T/2 \leq t \leq T$$

in dem Intervall 2 [L/2 ; L]:

$$Z2(t) = L/2 \left[ 1 + 2/N \ . \ \sqrt{\ln(T/(T-2.t))} \right]$$

für

$$0 \leq t \leq T/2$$

$$Z2(t) = L \ \text{für} \ T/2 \leq t \leq T$$

wo L die Länge der Interferenzfigur ist, T die Gesamtdauer der Photoinduktion ist, und N die Anzahl bijektiver Abbildungen ist, die ermöglichen, die normierte Modulationshüllkurvenfunktion zu definieren.

FIG. 1

FIG. 2

FIG. 3

FIG. 4

FIG. 5

FIG. 6

FIG. 7

FIG. 8

24

FIG. 9

FIG. 10

FIG. 12

EP 1 078 288 B1

FIG. 11

44  42  48  46  36

T (%)

100
80
60
40
20
0

1318,5        1319        1319,5

λ (nm)

FIG. 13

76    78    80

$\lambda_{Bragg}/4n$    Λ

FIG. 14

FIG. 15

FIG. 16

FIG. 17

# EP 1 078 288 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 0188919 A

- US 4792197 A

### Littérature non-brevet citée dans la description

- **C.G. ASKINS ; T.-E. TSAI ; G.M. WILLIAMS ; M.A. PUTNAM ; M. BASHKANSKY ; E.J. FRIEBELE.** Fiber Bragg reflectors prepared by a single excimer pulse. *Optics Letters,* 1992, vol. 17 (11), 833-835
- **F. BILODEAU ; K.O. HILL ; B. MALO ; D.C. JOHNSON ; J. ALBERT.** High-return-loss narrow-band all-fiber bandpass Bragg transmission filter. *IEEE Phot. Tech. Lett,* 1994, vol. 6 (1), 80-82
- **I. BAUMANN ; J. SEIFERT ; W. NOWAK ; M. SAUER.** Compact all-fiber Add-Drop-Multiplexer using Fiber Bragg Gratings. *IEEE Phot. Tech. Lett.,* 1996, vol. 8 (10), 1331-1333
- **C.H. HENRY ; Y. SHANI ; R.C. KISTLER ; T.E. JEWELL ; V. POL ; N.A. OLSSON ; R.F. KAZARINOV ; K.J. ORLOWSKY.** Compound Bragg reflection filters made by spatial frequency doubling lithography. *J. Lightwave Technol.,* 1989, vol. 7 (9), 1379-1385
- **K.O. HILL ; D.C. JOHNSON ; F. BILODEAU ; S. FAUCHER.** Narrow-bandwidth optical waveguide transmission filters. *Electron. lett.,* 1987, vol. 23 (9), 465-466
- **R. KASHYAP ; G.D. MAXWELL ; B.J. AINSLIE.** Laser-trimmed four-port bandpass filter fabricated in single-mode photosensible Ge-doped planar waveguide. *IEEE Phot. Tech. Lett.,* 1993, vol. 5 (2), 191-194

- **R. KASHYAP ; P.F. MCKEE ; D. ARMES.** UV written reflection grating structures in photosensitive optical fibres using phase-shifted phase masks. *Electron. Lett.,* 1994, vol. 30 (23), 1977-1978
- **S. LEGOUBIN ; M. DOUAY ; P. BERNAGE ; P. NIAY ; J.F. BAYON ; T. GEORGES.** Photoinscription de filtres de Bragg dans des fibres dopées à l'oxyde de germanium. *J. Optics.,* 1992, vol. 23 (4), 143-156
- **S. LEGOUBIN ; M. DOUAY ; P. BERNAGE ; P.NIAY ; J.F. BAYON ; T. GEORGES.** *J. Opt. Soc. Am., A,* 1995, vol. 12, 1687
- **G. MELTZ ; W.W. MOREY ; W.H. GLENN.** Formation of Bragg gratings in optical fibers by a transverse holographic method. *Optics Letters,* 1989, vol. 14, 823-825
- **I. RIANT ; P. SANSONETTI ; H. FEVRIER ; S. ARTIGAUD.** Réalisation d'un filtre de Bragg photo-inscrit dans une fibre optique à l'aide d'un montage interférométrique constitué d'un miroir unique. *Communication aux JNOG,* 1993
- **M.YAMADA ; K. SAKUDA.** Analysis of almost-periodic distributed feedback slab waveguides via a fundamental matrix approach. *Applied Optics,* 1987, vol. 26 (16), 3474-3478
- **R. ZENGERLE ; O. LEMINGER.** Phase-shifted Bragg-Grating Filters with Improved Transmission Characteristics. *J. Lightwave Technol.,* 1995, vol. 13 (12), 2354-2358